# FASCICULE DE BREVET EUROPEEN

(11) **EP 1 153 277 B1**
(45) Date de publication et mention de la délivrance du brevet: **06.10.2004**
(21) Numéro de dépôt: 00905126.9
(22) Date de dépôt: 14.02.2000
(51) Int. Cl.: G01M 3/18, G21F 5/12

(54) **EMBALLAGE A CONTROLE CONTINU D'ETANCHEITE**
VERPACKUNG MIT STÄNDIGER KONTROLLE IHRER DICHTIGKEIT
PACKAGING WITH CONTINUOUS LEAK MONITORING

(30) Priorité: 15.02.1999 FR 9901782
(43) Date de publication de la demande: 14.11.2001
(73) Titulaire: COMMISSARIAT A L'ENERGIE ATOMIQUE, 75752 Paris Cédex 15 (FR)
(72) Inventeur: TOMBINI, Christian, F-33610 Cestas (FR)
(74) Mandataire: Brykman, Georges
(86) Numéro de dépôt international: PCT/FR2000/000356
(87) Numéro de publication internationale: WO 2000/047972

(56) Documents cités:
- US-A- 4 135 384
- US-A- 4 495 139
- US-A- 5 090 871

## Description

### Domaine de l'invention

L'invention a pour objet un emballage, un conteneur ou une enceinte de confinement dont les taux de fuite doivent si possible être nuls ou rester très faibles. L'invention est applicable en particulier aux conteneurs de transport ou stockage de produits radioactifs ou de produits chimiques toxiques.

### Arrière plan technologique

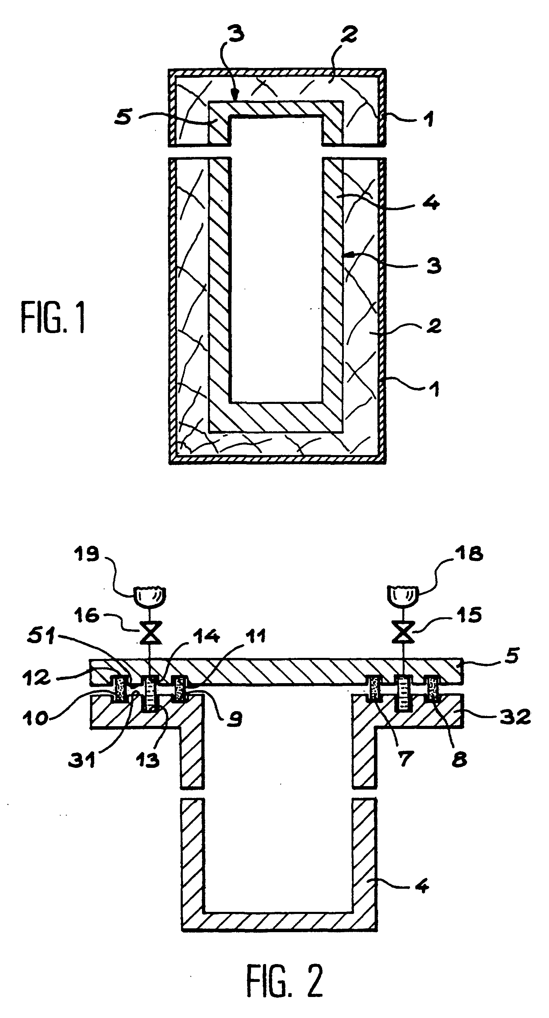

Un conteneur de stockage ou de transport de produits dangereux est représenté figure 1. Ce conteneur comprend de façon connue une enveloppe 1 par exemple en acier. Cette enveloppe contient une protection mécanique et thermique 2 à l'intérieur de laquelle est logée l'enceinte de confinement proprement dite 3. Cette enceinte est fabriquée dans une matière adaptée à contenir la matière dangereuse à stocker. L'enceinte est constituée par une cuve 4 et un couvercle 5. De la même façon l'enveloppe 1 et la protection mécanique et thermique 2 comprennent une partie protégeant la cuve 4 et une partie protégeant le couvercle 5. Le couvercle 5 de l'enceinte est généralement constitué par une tape dans laquelle les joints sont maintenus. L'une des portées de joints est solidaire de la cuve 4 l'autre est assurée par le couvercle 5. Les portées de joints sont généralement métalliques par exemple en acier. Dans de nombreuses enceintes, l'étanchéité est assurée par deux joints élastomères. Le volume interjoint, c'est à dire le volume compris entre les deux joints le couvercle 5 et la cuve 4, sert aux mesures du taux de fuite. Après remplissage de l'enceinte et sa fermeture, on peut éventuellement mesurer la pression dans l'espace interjoint, en ayant par exemple préalablement vidé ce volume et ensuite rempli d'hélium, et contrôler ainsi l'étanchéité avant le stockage définitif où le transport de l'enceinte. Mais ensuite, ce dispositif de contrôle de pression n'est pas conservé à demeure pour des questions de pollution que pourrait causer le gaz contenu dans l'espace interjoint en cas de fuite. D'autre part, l'étanchéité dans le temps n'est pas garantie, les joints pouvant devenir poreux, notamment à cause de l'air situé dans l'espace interjoint ou des produits contenus dans l'enceinte.

L'invention est relative à une enceinte qui permet de résoudre les deux problèmes de l'art antérieur : contrôler en permanence l'étanchéité de l'enceinte et secondairement permettre une moindre dégradation des joints.

Un système dans lequel l'étanchéité d'une enceinte est contrôlée en permanence à l'aide d'un détecteur optique relié à l'espace interjoint est connu, voir le document US-A-5 090 871. Le document US-A-4 495 139 pour sa part décrit un système dans lequel l'étanchéité d'une enceinte est mesurée au moyen de jauges sensibles à la présence d'un gaz traceur s'échappant de l'enceinte, ledit gaz traceur étant détecté dans l'espace interjoint. Enfin, le document US-A-4 135 384 décrit un système dans lequel l'étanchéité d'une enceinte est mesurée à l'aide d'un détecteur électrique permettant la mesure des variations de la conductivité électrique d'un liquide entourant l'enceinte.

### Brève description de l'invention.

Pour mesurer en continu le débit de fuite de l'enceinte 3, on introduit un liquide dans le volume interjoint délimité par le couvercle, la cuve et au moins deux joints. Le liquide qui occupe le volume interjoint participe à l'étanchéité de l'emballage en bouchant d'éventuels petits trous des joints. La modification d'une valeur d'une grandeur électrique mesurée entre le couvercle et la cuve, variable en fonction de la quantité de liquide contenue dans le volume interjoint, permet alors de déterminer une valeur de la fuite. Lorsque le couvercle 5 est mis en place et serré sur la cuve 4, on introduit le liquide par exemple au moyen d'un premier robinet. Lorsque le liquide a rempli le volume interjoint, les bulles d'air et le trop plein de liquide s'évacuent par un deuxième robinet. La fermeture des deux robinets permet de s'assurer que le volume interjoint est plein de liquide. Une fuite se traduira par un départ de liquide et donc par une modification de la valeur d'une grandeur électrique mesurée entre le couvercle et la cuve. Ainsi, prise dans, sa forme la plus générale, l'invention est-elle relative à une enceinte étanche comportant une cuve ayant une portée de couvercle pour recevoir un couvercle, cette portée de couvercle comportant elle-même au moins deux portées de joints, des joints d'étanchéité insérés dans les portées de joints de la cuve, un couvercle ayant des portées de joints,les joints d'étanchéité étant insérés également dans lesdites portées de joints du couvercle, deux joints, une surface interjoint du couvercle et une surface interjoint de la cuve, délimitant ensemble un volume interjoint, conteneur étanche caractérisé en ce qu'il comporte au moins deux moyens pour mettre en communication de façon réversible ledit volume interjoint avec une amenée de fluide pour l'un des moyens de mise en communication de façon réversible, avec une évacuation de fluide pour l'autre moyen de mise en communication de façon réversible, et des moyens de couplage électrique pour coupler électriquement avec des moyens de mesure extérieurs le couvercle d'une part et la cuve d'autre part.

Ainsi de façon avantageuse, l'invention permet un contrôle continu du débit de fuite de l'enceinte.

Dans le mode préféré de réalisation, les moyens pour mettre en communication de façon réversible le volume interjoint avec une amenée et une évacuation de fluide respectivement, sont constitués par des vannes ou robinets.

Le contrôle d'étanchéité est principalement assuré par l'interposition dans l'espace interjoint d'un liquide conducteur permettant d'assurer une continuité électrique entre le couvercle et la cuve de l'enceinte. Il suffit alors par des moyens appropriés de faire circuler un courant entre le couvercle et la cuve et de mesurer en continu une grandeur électrique (intensité, résistance, .....) : une dérive de cette grandeur ou une variation totale complète (intensité devient nulle, résistance devient infinie, .....) témoignera alors de la disparition de tout ou partie du liquide et donc de la perte d'étanchéité. En quelque sorte, on ferme un circuit dont une partie est constituée du liquide conducteur dans l'espace interjoint qui s'ouvre dès que le liquide disparaît de ce volume. La nature de ce liquide conducteur dépend de l'application. Il est à signaler que l'interposition du liquide améliore par elle-même l'étanchéité, rôle de 3^{ème} joint et possibilité d'améliorer la tenue dans le temps des deux autres joints. De préférence, les moyens de mesure de la grandeur électrique sont couplés à des moyens de déclenchement d'alarme eux-mêmes couplés à une alarme visuelle ou sonore.

L'invention est également relative à un procédé de détection des fuites d'une enceinte étanche comportant une cuve, un couvercle et deux joints serrés entre la cuve et le couvercle, délimitant un volume interjoint, procédé caractérisé en ce que :
- on remplit le volume interjoint avec un liquide conducteur de l'électricité ;
- on fait passer un courant électrique entre la cuve et le couvercle ;
- on mesure la résistance ou la valeur du courant pour en déduire une déperdition de la quantité de liquide conducteur contenue dans le volume interjoint.

Le dispositif selon l'invention est défini dans les revendications indépendantes 1 et 5, le procédé dans la revendication indépendante 7. Les modes particuliers de réalisation sont définis dans les revendications dépendantes 2, 3, 4 et 6.

Un exemple de réalisation de l'invention sera maintenant décrit en regard des dessins annexés dans lesquels :
- la figure 1, déjà commentée, représente une coupe schématique d'un emballage étanche générique,
- la figure 2 est une coupe axiale schématique d'une enceinte de confinement selon l'invention destinée à montrer les moyens de remplissage du volume interjoint;
- la figure 3 représente une vue de dessus de la cuve de l'enceinte représentée figure 2; et
- la figure 4 représente une coupe axiale schématique d'une enceinte de confinement selon l'invention destinée à montrer les moyens de mesure d'une grandeur électrique mesurée entre le couvercle et la cuve, de déclenchement d'alarme, et d'alarme.

La figure 2 est une coupe axiale d'une cuve 4 et d'un couvercle 5 selon l'invention. Cette figure est destinée surtout à montrer le volume interjoint d'une part, et les vannes de remplissage et de trop plein d'autre part.

La cuve 4 a une portée de couvercle 32. Cette portée de couvercle comporte deux gorges porte-joint, une gorge intérieure 9 et une gorge extérieure 10. Elle comporte également une gorge centrale 13 entre les gorges 9 et 10. Le couvercle 5 comporte une gorge intérieure 11 destinée à recevoir un joint et une gorge extérieure 12. Il comporte également une gorge centrale 14 située entre les gorges 11 et 12. Lorsque le couvercle est en place, les gorges 11 et 12 du couvercle, et les gorges 9 et 10 de la portée de couvercle de la cuve 4 sont face à face et serrent des joints intérieur 7 et extérieur 8. Les gorges interjoints 13 de la cuve 4 et 14 du couvercle 5 sont face à face et sont en communication avec l'extérieur de façon réversible au moyen de vannes 15 et 16 respectivement. La vanne 15 peut être la vanne de remplissage et la vanne 16 la vanne de trop plein et de purge. Lorsque l'enceinte de confinement composée de la cuve 4 et du couvercle 5 est mise en place dans un conteneur comportant l'enveloppe 1 et la protection mécanique et thermique 2 (figure 1) les vannes 15 et 16 viennent se noyer, de façon accessible, dans la matière constituant l'enveloppe de protection mécanique et thermique 2. Les vannes 15, 16 mettent en communication un volume 33 interjoint avec une amenée de liquide 18 et une évacuation de liquide 19 repsectivement.

Sur la figure 2, ces amenées 18 et évacuation 19 ont été représentées sous forme d'entonnoirs débouchant dans des conduits de vanne. Selon le liquide introduit, il pourrait s'agir de raccords étanches ou de tout autre moyen connu.

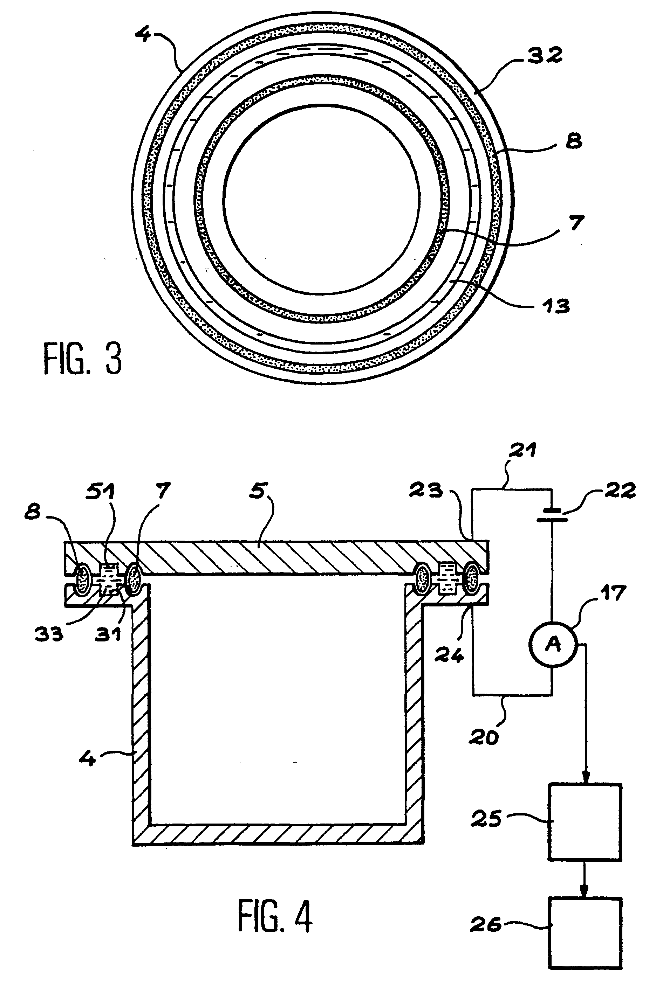

Des conducteurs 20, 21 représentés figure 4 permettent de connecter la cuve 4 et le couvercle 5 respectivement à des moyens de mesure 17, 22 d'une grandeur électrique mesurée entre une partie 23 du couvercle 5 et une partie 24 de la cuve 4. Le fonctionnement est le suivant : lorsque le couvercle est mis en place et serré au moyen de boulons (non représentés) sur la cuve 4, un volume interjoint 33 délimité par une surface 31 de la cuve 4 comprise entre les deux gorges 9 et 10 et une surface 51 du couvercle 5 comprise entre les gorges 11 et 12 et enfin par les joints 7 et 8 est remplie d'un liquide au moyen de la vanne 15. Pendant le remplissage, la vanne 16 est ouverte en sorte que l'air contenu dans le volume interjoint 33 peut s'échapper par la vanne 16. Lorsque le liquide déborde au niveau de la vanne 16 et après une purge totale de l'air, les deux vannes 15 et 16 sont fermées. Pour une plus grande sensibilité de mesure le volume 33 est de préférence comme représenté figure 3 ou 4, augmenté par adjonction d'une gorge 13 dans la cuve ou 14 dans le couvercle. Dans le mode préféré de réalisation, les moyens 17 et 22 sont respectivement un ampèrémètre et une source de tension générant quelques milliampères qui circulent entre le couvercle et la cuve en passant à travers le liquide qui, de préférence est un liquide conducteur. Une ouverture occasionnera une fuite du liquide interjoint et modifiera la résistance du montage pouvant aller jusqu'à une coupure du circuit électrique. De préférence, l'ampèremètre 17 est couplé des moyens de déclenchement d'alarme 25 qui déclencheront une alarme 26 lorsque la valeur mesurée sera en dessous d'un certain seuil. Le liquide conducteur peut être un alliage métallique conducteur de gallium, indium, étain, ce peut être aussi un liquide conducteur de type métallique pour tenir en température comme le mercure, dont le domaine d'utilisation peut aller de -38°C à + 350°C, des solutions aqueuses de faible coût comme des solutions salines de chlorure de sodium ou de sulfate de cuivre, des solutions de type organique comme les acides organiques à chaîne longue ou les phénols pour assurer un meilleur contact avec les joints. Le liquide pourra être aussi un liquide ayant une forte constante diélectrique et dans ce cas on mesurera une capacité entre le couvercle et la cuve.

## Revendications

1. Enceinte (3) étanche comportant une cuve (4) ayant une portée (32) de couvercle (5) pour recevoir un couvercle (5), cette portée (32) de couvercle (4) comportant elle-même au moins deux portées (9,10) de joints (7,8), des joints (7,8) d'étanchéité insérés dans les portées (9,10) de joints (7,8) de la cuve (4), un couvercle (5) ayant des portées (11,12) de joints (7,8) du couvercle (5), les joints d'étanchéité (7,8) étant insérés également dans lesdites portées (11,12) de joints (7,8) du couvercle, deux joints (7,8), une surface (51) interjoint du couvercle (5) et une surface (31) interjoint de la cuve (4) délimitant ensemble un volume (33) interjoint, enceinte (100) étanche **caractérisée en ce qu'**elle comporte au moins deux moyens (15,16) pour mettre en communication de façon réversible ledit volume (33) interjoint avec une amenée (18) de fluide pour l'un (15) des moyens de mise en communication de façon réversible, et une évacuation (19) de fluide pour l'autre moyen (16) de mise en communication de façon réversible, et des moyens de couplage électrique (20,21) pour coupler électriquement avec des moyens (17,22) de mesure extérieurs, le couvercle (5) d'une part et la cuve (4) d'autre part.

2. Enceinte (3) étanche selon la revendication 1, **caractérisée en ce que** les moyens (15) pour mettre en communication de façon réversible le volume (33) interjoint avec une amenée (18) de fluide, comportent une vanne ou un robinet et **en ce que** les moyens (16) de communication de façon réversible pour évacuer le fluide, comportent une vanne ou un robinet.

3. Enceinte (3) étanche selon l'une des revendications 1 ou 2, **caractérisé en ce que** les moyens de mesure extérieurs comportent une source de courant (22) et un ampèremètre (17).

4. Enceinte (3) selon l'une des revendications 1 à 3, **caractérisé en ce que** les moyens de mesure extérieurs (17,22) sont connectés à des moyens de déclenchement d'alarme (25,26).

5. Enceinte (3) étanche fermée comportant une cuve (4) ayant une portées (32) de couvercle (5) pour recevoir un couvercle (5), cette portée (32) de couvercle (5) comportant elle-même au moins deux portées (9,10) de joints (7,8), des joints (7,8) d'étanchéité insérés dans les portées (9,10) de joints (7,8) de la cuve (4), un couvercle (5) ayant des portées (11,12) de joints (7,8) du couvercle (5), les joints d'étanchéité (7,8) étant insérés également dans lesdites portées (11,12) de joints (7,8) du couvercle, deux joints (7,8), une surface (51) interjoint du couvercle (5) et une surface (31) interjoint de la cuve (4) délimitant ensemble un volume (33) interjoint, enceinte (100) étanche **caractérisée en ce qu'**elle comporte au moins deux moyens (15,16) pour mettre en communication de façon réversible ledit volume (33) interjoint avec une amenée (18) de fluide pour l'un (15) des moyens de mise en communication de façon réversible, et une évacuation (19) de fluide pour l'autre moyen (16) de mise en communication de façon réversible, et des moyens de couplage électrique (20,21) pour coupler électriquement avec des moyens (17,22) de mesure extérieurs, le couvercle (5) d'une part et la cuve (4) d'autre part, et **en ce que** un liquide conducteur de l'électricité est contenu dans le volume (33) interjoint.

6. Enceinte étanche fermée selon la revendication 5, **caractérisée en ce que** le liquide conducteur est un alliage métallique de gallium indium étain, ou du mercure, ou une solution aqueuse conductrice ou un liquide organique conducteur.

7. Procédé de détection des fuites d'une enceinte étanche comportant une cuve, un couvercle et deux joints serrés entre la cuve et le couvercle, délimitant un volume interjoint, procédé **caractérisé en ce que** :
- on remplit le volume interjoint avec un liquide conducteur de l'électricité ;
- on fait passer un courant électrique entre la cuve et le couvercle ;
- on mesure la résistance ou la valeur du courant pour en déduire une déperdition de la quantité de liquide conducteur contenue dans le volume interjoint.

## Patentansprüche

1. Dichte Verpackungsvorrichtung (3), einen Behälter (4) mit einer Aufnahme (32) für einen Deckel (5) umfassend, wobei diese Aufnahme (32) des Deckels (5) selbst wenigstens zwei Aufnahmen (9,10) für Dichtungen (7,8) aufweist, und Dichtungen (7,8) umfassend, eingefügt in die Aufnahmen (9,10) des Behälters (4) für die Dichtungen (7,8), und einen Deckel (5) umfassend, mit Aufnahmen (11,12) des Deckels (5) für die Dichtungen (7,8), wobei die Dichtungen (7,8) auch in die genannten Aufnahmen (11,12) für Dichtungen (7,8) des Deckels eingefügt sind und zwei Dichtungen (7,8) zusammen mit einer Zwischenfläche (51) des Deckels (5) und einer Zwischenfläche (31) des Behälters ein Zwischenvolumen (33) abgrenzen, und die Verpackungsvorrichtung (3) dabei **dadurch gekennzeichnet ist, dass** sie wenigstens zwei Einrichtungen (15,16) zur reversiblen Verbindungsherstellung umfasst, die das genannte Zwischenvolumen (33) reversibel mit einer Fluidzuführung (18), die der Verbindungsherstellungseinrichtung (15) zugeordnet ist, und reversibel mit einer Fluidabführung (19), die der Verbindungsherstellungseinrichtung (16) zugeordnet ist, verbindet, und elektrische Kopplungseinrichtungen (20,21) umfasst, um mittels äußerer Messeinrichtungen (17,22) einerseits den Deckel (5) und andererseits den Behälter (4) elektrisch zu koppeln.

2. Dichte Verpackungsvorrichtung (3) nach Anspruch 1, **dadurch gekennzeichnet, dass** die Einrichtungen (15) zur reversiblen Verbindungsherstellung zwischen dem Zwischenvolumen (33) und einer Fluidzuführung (18) eine Ventil oder einen Hahn umfassen, und dass die Einrichtungen (16), die der reversiblen Verbindungsherstellung zur Fluidabführung dienen, einen Ventil oder einen Hahn umfassen.

3. Dichte Verpackungsvorrichtung (3) nach einem der Ansprüche 1 oder 2, **dadurch gekennzeichnet, dass** die äußeren Messeinrichtungen eine Stromquelle (22) und ein Amperemeter (17) umfassen.

4. Dichte Verpackungsvorrichtung (3) nach einem der Ansprüche 1 bis 3, **dadurch gekennzeichnet, dass** die äußeren Messeinrichtungen (17,22) mit Alarmauslösungseinrichtungen (25,26) verbunden sind.

5. Dichte Verpackungsvorrichtung (3), einen Behälter (4) mit einer Aufnahme (32) für einen Deckel (5) umfassend, wobei diese Aufnahme (32) des Deckels (5) selbst wenigstens zwei Aufnahmen (9,10) für Dichtungen (7,8) aufweist, und Dichtungen (7,8) umfassend, eingefügt in die Aufnahmen (9,10) des Behälters (4) für die Dichtungen (7,8), und einen Deckel (5) umfassend, mit Aufnahmen (11,12) des Deckels (5) für die Dichtungen (7,8), wobei die Dichtungen (7,8) auch in die genannten Aufnahmen (11,12) für Dichtungen (7,8) des Deckels eingefügt sind und zwei Dichtungen (7,8) zusammen mit einer Zwischenfläche (51) des Deckels (5) und einer Zwischenfläche (31) des Behälters ein Zwischenvolumen (33) abgrenzen, und die Verpackungsvorrichtung (3) dabei **dadurch gekennzeichnet ist, dass** sie wenigstens zwei Einrichtungen (15,16) zur reversiblen Verbindungsherstellung umfasst, die das genannte Zwischenvolumen (33) reversibel mit einer Fluidzuführung (18), die der Verbindungsherstellungseinrichtung (15) zugeordnet ist, und reversibel mit einer Fluidabführung (19), die der Verbindungsherstellungseinrichtung (16) zugeordnet ist, verbindet, und elektrische Kopplungseinrichtungen (20,21) umfasst, um mittels äußerer Messeinrichtungen (17,22) einerseits den Deckel (5) und andererseits den Behälter (4) elektrisch zu koppeln, und dadurch, dass in dem Zwischenvolumen (33) eine elektrisch leitfähige Flüssigkeit enthalten ist.

6. Dichte Verpackungsvorrichtung nach Anspruch 5, **dadurch gekennzeichnet, dass** die leitfähige Flüssigkeit eine metallische Gallium-Indium-Zinn-Legierung oder Quecksilber oder eine leitfähige organische Flüssigkeit ist.

7. Verfahren zur Detektion der Lecks einer dichten Verpackungsvorrichtung mit einem Behälter, einem Deckel und zwei zwischen dem Behälter und dem Deckel eingeklemmten Dichtungen, wobei dieses Verfahren **dadurch gekennzeichnet ist, dass**:
- man das Zwischenvolumen mit einer elektrisch leitfähigen Flüssigkeit füllt;
- man zwischen dem Behälter und dem Deckel einen elektrischen Strom fließen lässt;
- man den Widerstand oder den Stromwert misst, um daraus einen Verlust der in dem Zwischenvolumen enthaltenen Flüssigkeitsmenge abzuleiten.

## Claims

1. Leaktight containment (3) comprising a tank (4) having a surface (32) of cover (5) to receive a cover (5), this surface (32) of cover (5) itself comprising at least two gasket (7, 8) surfaces (9, 10), leaktight seals (7, 8) inserted in the surfaces (9, 10) of gaskets (7, 8) of the tank (4), a cover (5) having surfaces (11, 12) of gaskets (7, 8) of the cover (5), the leaktight seals (7, 8) being also inserted in the said surfaces (11, 12) of seals (7, 8) of the cover, two seals (7, 8), an inter-seal surface (51) of the cover (5) and an inter-seal surface (31) of the tank (4) together delimiting an inter-seal volume (33) leaktight (100) chamber, **characterized in that** it comprises at least two means (15, 16) to place in communication in a reversible manner the said inter-seal volume (33) with a fluid inlet (18) for one (15) of the reversible connecting means, and a drain (19) for fluid for the other means (16) of the reversible connecting means, and electric coupling means (20, 21) to connect electrically, with outside measurement means (17, 22), the cover (5) on the one hand and the tank (4) on the other hand.

2. Leaktight chamber (3) according to claim 1, **characterized in that** the means (15) to connect the inter-seal volume (33) in a reversible manner with a fluid inlet (18) comprise a valve or tap and **in that** the means (16) of reversible connection to drain the fluid comprise a valve or tap.

3. Leaktight chamber (3) according to one of the claims 1 or 2, **characterized in that** the outside measurement means comprise a source of current (22) and an ammeter (17).

4. Leaktight chamber (3) according to one of the claims 1 to 3, **characterized in that** the outside measurement means (17, 22) are connected to alarm triggering means (25, 26).

5. Closed leaktight chamber (3) comprising a tank (4) having a cover (5) surface (32) to receive a cover (5), this surface (320 of cover (5) comprising itself at least two surfaces (9, 10) of seals (7, 8) leaktight seals (7, 8) inserted in the surfaces (9, 10) of seals (7, 8) of the tank (4), a cover (5) with surfaces (11, 12) of seals (7, 8) of the cover (5), the leaktight seals (7, 8) being inserted also in the said surfaces (11, 12) of seals (7, 8) of the cover, two seals (7, 8), an inter-seal surface (51) of the cover (5) and an inter-seal surface (31) of the tank (4) together delimiting an inter-seal volume (33), **characterized in that** it comprises at least two means (15, 16) to connect reversibly the said inter-seal volume (33) with a fluid inlet (18) for one (15) of the means of reversible connection, and a fluid drain (19) for the other means (16) of reversible connection, and electric coupling means (20, 21) to electrically connect with the outside measurement means (17, 22), the cover (5) on the one hand, and the tank (4) on the other hand, and **in that** the electricity-conducting liquid is contained in the inter-seal volume (33).

6. Closed leaktight chamber according to claim 5, **characterized in that** the conductive liquid is a metallic alloy of gallium, indium, tin, or mercury, or a watery conductive solution or an organic conductive liquid.

7. Process for the detection of leaks from a leaktight chamber comprising a tank, a cover and two seals tightened between the tank and the cover, delimiting an inter-seal volume process, **characterized in that**:
- the inter-seal volume is filled with a liquid which conducts electricity;
- an electric current is circulated between the tank and the cover;
- the resistance or value of the current is measured in order to deduce a loss of the quantity of conductive liquid contained in the inter-seal volume.
